# FASCICULE DE BREVET EUROPEEN

(11) **EP 3 599 707 B1**
(45) Date de publication et mention de la délivrance du brevet: **21.10.2020**
(21) Numéro de dépôt: 19188505.2
(22) Date de dépôt: 26.07.2019
(51) Int. Cl.: H02K 9/06

(54) **MOTEUR ÉLECTRIQUE FERROVIAIRE COMPRENANT UN DISPOSITIF DE REFROIDISSEMENT ET VÉHICULE FERROVIAIRE ASSOCIÉ**
ELEKTRO-SCHIENFAHRZEUGMOTOR, DER EINE KÜHLVORRICHTUNG UMFASST, UND ENTSPRECHENDES SCHIENENFAHRZEUG
ELECTRIC RAILWAY MOTOR COMPRISING A COOLING DEVICE AND ASSOCIATED RAILWAY VEHICLE

(30) Priorité: 26.07.2018 FR 1856967
(43) Date de publication de la demande: 29.01.2020
(73) Titulaire: ALSTOM Transport Technologies, 93400 Saint-Ouen (FR)
(72) Inventeur: RANDRIA, Andry-Mamy, 25000 BESANCON (FR); DUBOIS, Philippe, 25620 TREPOT (FR)
(74) Mandataire: Lavoix

(56) Documents cités:
- EP-A1- 2 538 527
- US-A1- 2012 062 076
- US-B2- 6 844 638

## Description

La présente invention concerne un moteur électrique comprenant un dispositif de refroidissement et un véhicule ferroviaire comprenant un tel moteur électrique.

Dans le domaine des moteurs électriques, notamment pour véhicule ferroviaire, il est connu d'utiliser des dispositifs de refroidissement faisant circuler un fluide externe, par exemple de l'air extérieur au moteur, dans le moteur afin de refroidir un rotor et/ou un stator du moteur.

Il est notamment connu du document JP 5801127 B2, un moteur électrique muni d'un dispositif de refroidissement comprenant des éléments de refroidissement positionnés de part et d'autre du rotor et propres à tourner simultanément au rotor. Chaque élément de refroidissement permet, lorsqu'il est en rotation, la circulation d'un flux d'air depuis un orifice d'entrée d'air extérieur vers un orifice de sortie d'air en passant par un canal d'air en contact avec l'élément de refroidissement. Toutefois, un tel moteur a une structure complexe, est bruyant lorsqu'il est en fonctionnement et que le rotor tourne et n'est pas optimisé en termes d'efficacité, les pertes mécaniques étant importantes. Le document EP2538527 divulgue un moteur électrique similaire.

C'est à ces inconvénients qu'entend remédier l'invention en proposant un moteur électrique de structure simplifiée, dans lequel le bruit et les pertes mécaniques sont minimisés tout en assurant un refroidissement du moteur.

A cet effet, l'invention a pour objet un moteur électrique comprenant un rotor, un stator, un dispositif de refroidissement et un bâti,
le bâti définissant un espace intérieur de réception du rotor, du stator et du dispositif de refroidissement, le bâti comprenant au moins un orifice de refroidissement reliant l'espace intérieur à un espace extérieur au bâti,
le rotor comprenant deux extrémités opposées suivant un axe de rotation du rotor,
le dispositif de refroidissement comprenant au moins un élément de refroidissement disposé à l'une des extrémités du rotor, chaque élément de refroidissement comprenant une paroi de fixation au rotor, solidaire en rotation du rotor, et une paroi de refroidissement s'étendant, le long de l'axe de rotation du rotor, depuis la paroi de fixation jusqu'à une extrémité libre de l'élément de refroidissement, la paroi de refroidissement définissant un volume interne qu'elle entoure et comprenant une face interne en regard du ou de l'un des orifices de refroidissement et propre à être en contact avec un flux d'air traversant l'orifice de refroidissement et une face externe en regard du stator, opposée à la face interne, la face interne et la face externe s'étendant depuis la paroi de fixation jusqu'à l'extrémité libre,
caractérisé en ce que la face interne et la face externe sont globalement lisses et dépourvues d'éléments saillants, et chaque orifice de refroidissement débouche dans l'espace intérieur à proximité de la face interne de la ou de l'une des parois de refroidissement, à une distance mesurée suivant un axe central dudit orifice de refroidissement inférieure à 5 mm.

Grâce à l'invention, la structure du moteur électrique est simplifiée et le bruit et les pertes mécaniques sont minimisés puisque chaque élément de refroidissement a une structure simplifiée et est dépourvu d'éléments saillants au niveau de sa paroi de refroidissement. La structure des faces interne et externe de chaque paroi de refroidissement, qui sont des faces globalement lisses, permet une construction simplifiée du dispositif de refroidissement et de limiter les pertes mécaniques par frottement, ainsi que le bruit induit par de tels frottements.

Suivant des modes particuliers de réalisation, l'invention présente l'une ou plusieurs des caractéristiques suivantes, prises seules ou selon toutes les combinaisons techniquement envisageables :
- chaque orifice de refroidissement est agencé de sorte que pour chaque orifice de refroidissement, lors de la rotation du rotor, l'air pénétrant dans l'espace intérieur via ledit orifice de refroidissement ressort via le même orifice de refroidissement ;
- les faces interne et externe sont des surfaces réglées globalement lisses et dépourvues d'éléments saillants et sont avantageusement en forme de tronc de cône ou de cylindre s'étendant suivant l'axe de rotation du rotor ;
- le dispositif de refroidissement comprend deux éléments de refroidissement disposés chacun à l'une des extrémités respective du rotor et dans lequel le bâti comprend au moins un orifice de refroidissement respectif pour chaque élément de refroidissement ;
- le moteur électrique est configuré pour atteindre une vitesse nominale supérieure à 5000 tours par minute, de préférence de l'ordre de 6000 tours par minute ;
- une section de chaque orifice de refroidissement suivant une direction perpendiculaire à un axe traversant ledit orifice a une surface comprise entre 12,56 cm² et 314 cm² de préférence entre 27 cm² et 78 cm² ;
- chaque paroi de refroidissement divise l'espace intérieur en un espace primaire de réception d'air extérieur, relié aérauliquement à le ou l'un des orifices de refroidissement et dont l'air qu'il comprend est en contact avec la face interne et un espace secondaire dont l'air qu'il comprend est en contact avec la face externe et le stator;
- chaque extrémité libre est disposée en regard d'une paroi latérale respective du bâti, ladite paroi latérale étant munie d'une portion interne s'étendant suivant l'axe de rotation du rotor, et entourant ladite extrémité libre, une distance radiale entre ladite extrémité libre et ladite portion interne étant inférieure à 5 mm, de préférence à 1 mm.

L'invention a également pour objet un véhicule ferroviaire comprenant au moins un moteur électrique, dans lequel le ou chaque moteur électrique est tel que décrit ci-dessus.

L'invention sera mieux comprise à la lecture de la description qui va suivre, donnée uniquement à titre d'exemple et faite en se référant aux dessins annexés sur lesquels :
- la figure 1 est une représentation schématique partielle d'un véhicule ferroviaire comprenant deux bogies équipés chacun d'un moteur électrique selon un mode de réalisation de l'invention ;
- la figure 2 est une section selon un premier plan d'une partie du moteur électrique de la figure 1, le premier plan étant défini par une première direction X-X' correspondant à l'axe de rotation d'un rotor du moteur et par une deuxième direction Y-Y' perpendiculaire à la première direction X-X' ; et
- la figure 3 est une vue de côté suivant la première direction X-X' du moteur électrique de la figure 1.

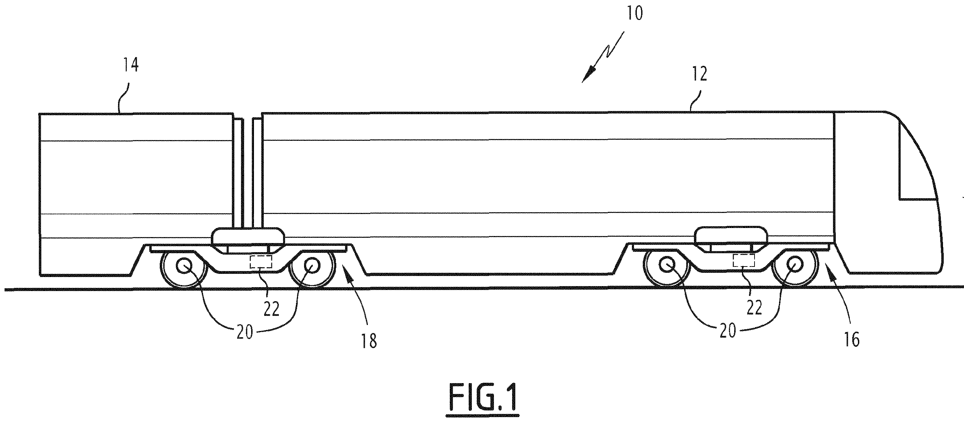

On a représenté sur la figure 1 un véhicule ferroviaire 10 comprenant une pluralité de voitures et notamment au moins deux voitures 12, 14 visibles sur la figure 1.

Sur la figure 1, la voiture 12 est une voiture pilote et la voiture 14 est une voiture remorque.

La voiture 12 est portée par un premier bogie dédié 16 et par un deuxième bogie 18 portant à la fois la voiture 12 et la voiture 14.

Dans l'exemple de la figure 1, chaque bogie 16, 18 comprend deux essieux 20 et un moteur électrique 22 propre à entraîner en rotation un ou les deux essieux 20 du bogie 16, 18.

En variante, tous les bogies ne sont pas motorisés et seulement certains des bogies 16, 18 du véhicule ferroviaire 10 comprennent un moteur électrique 22.

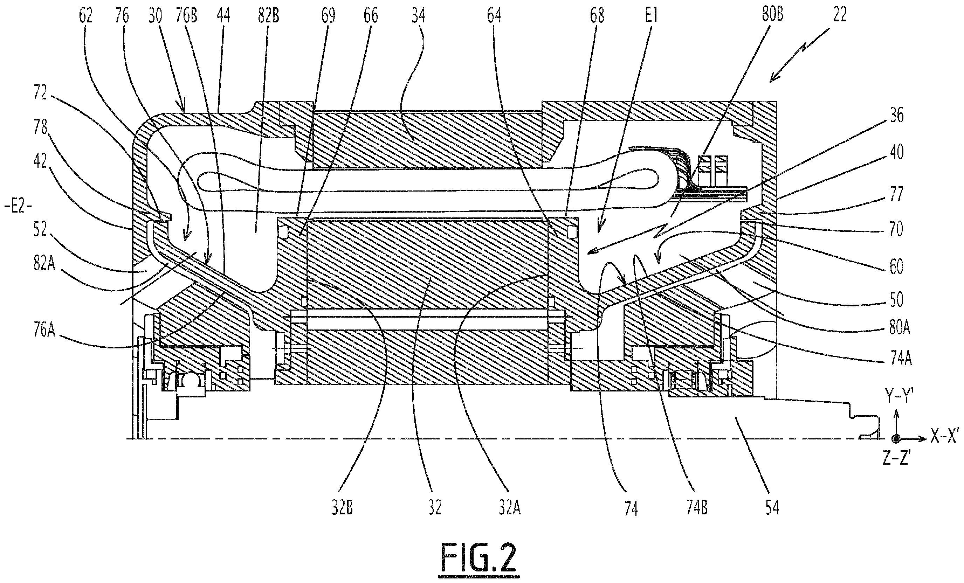

Sur la figure 2, pour des raisons de simplicité, seule la moitié du moteur électrique 22 est représentée, l'autre moitié étant sensiblement symétrique de la moitié représentée par rapport à la direction X-X'.

Le moteur électrique 22 est configuré pour atteindre une vitesse nominale supérieure à 5000 tours par minute, de préférence de l'ordre de 6000 tours par minute.

On entend par vitesse nominale, une vitesse normale de fonctionnement lorsque le véhicule ferroviaire 10 circule entre deux stations à une vitesse de croisière.

Le moteur électrique 22 comprend un bâti 30, ou carter, définissant un espace intérieur E1 du moteur 22, ainsi qu'un rotor 32, un stator 34 et un dispositif de refroidissement 36 logés dans l'espace intérieur E1.

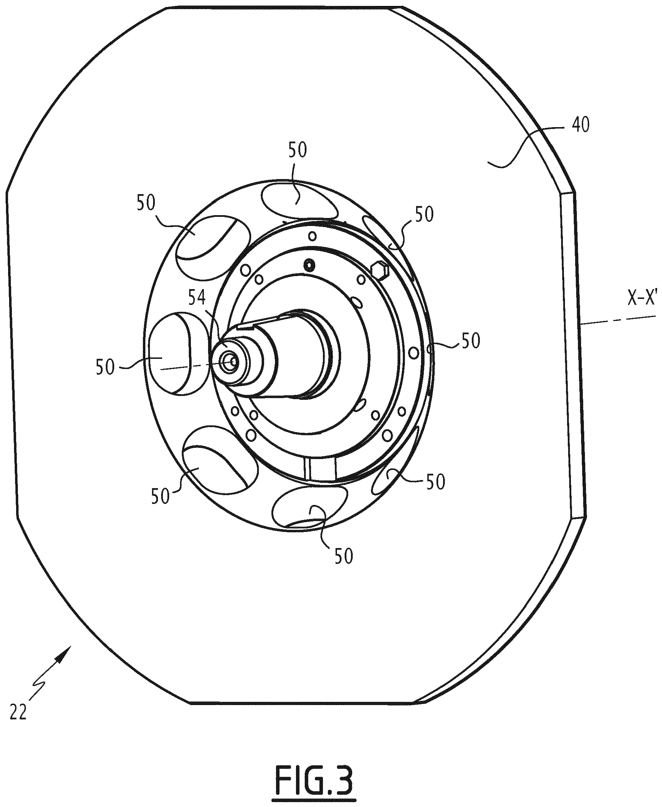

Le bâti 30 comprend deux parois latérales opposées 40, 42 s'étendant globalement perpendiculairement à la direction X-X', qui correspond à un axe R de rotation du rotor 32, et deux parois longitudinales opposées, dont une seule 44 est représentée à la figure 2, s'étendant globalement parallèlement à l'axe X-X'. Seule la paroi latérale 40 est visible sur la figure 3.

Les parois latérales 40, 42 et longitudinales 44 définissent l'espace intérieur E1.

Comme illustré par les figures 2 et 3, chaque paroi latérale 40, 42 comprend un orifice de refroidissement 50, 52 reliant l'espace intérieur E1 à un espace E2 extérieur au bâti 30. De préférence, chaque paroi latérale 40, 42 comprend au moins deux orifices de refroidissement 50, 52, lesdits orifices 50, 52 étant, avantageusement, disposés de manière symétrique suivant l'axe de rotation R.

Dans l'exemple illustré par les figures 2 et 3, chaque paroi latérale 40, 42 comprend huit orifices de refroidissement 50, 52, lesdits orifices 50, 52 étant disposés de manière symétrique suivant l'axe de rotation R du rotor 32.

Le rotor 32 est monté solidaire en rotation sur un arbre de rotation 54 et monté mobile en rotation autour de l'axe de rotation R par rapport au stator 34.

Le rotor 32 définit deux extrémités opposées 32A, 32B suivant l'axe de rotation R du rotor 32.

Le stator 34 entoure le rotor 32 parallèlement à l'axe de rotation R à l'intérieur du bâti 30 et est coaxial au rotor 32. De façon classique, le rotor 32 et le stator 34 permettent de transformer une énergie électrique en énergie mécanique délivrée par l'arbre 54 du rotor 32 et destinée à entraîner les essieux 20.

Le dispositif de refroidissement 36 comprend au moins un élément de refroidissement 60 disposé à l'une des extrémités 32A, 32B du rotor 32.

Avantageusement, et comme représenté à la figure 2, le dispositif de refroidissement comprend deux éléments de refroidissement 60, 62 disposés chacun à l'une des extrémités respective 32A, 32B du rotor 32.

Avantageusement encore, le nombre d'orifices de refroidissement 50, 52 est un multiple du nombre d'éléments de refroidissement 60, 62, et le bâti 30 comprend notamment deux orifices de refroidissement 50, 52 disposés de manière symétrique ou non suivant l'axe de rotation R, pour chaque élément de refroidissement 60, 62.

En variante, le bâti 30 comprend au moins un orifice de refroidissement 50, 52 respectif pour chaque élément de refroidissement 60, 62.

Chaque élément de refroidissement 60, 62 comprend une paroi 64, 66 de fixation au rotor 32 et notamment de fixation à l'extrémité correspondante 32A, 32B du rotor 32.

Chaque paroi de fixation 64, 66 est solidaire en rotation du rotor 32 et s'étend suivant une direction radiale à l'axe de rotation R.

Chaque paroi de fixation 64, 66 comprend suivant la direction radiale à l'axe de rotation R du rotor 32 une extrémité radiale 68, 69 affleurant par rapport au rotor 32 suivant ladite direction radiale. L'extrémité radiale 68, 69 est disposée en regard du stator 34 et à proximité du stator 34, c'est-à-dire, par exemple, à une distance, mesurée suivant la direction radiale, inférieur à 5 mm, de préférence à 1 mm. Chaque élément de refroidissement 60, 62 comprend également une extrémité libre 70, 72 située à l'opposé du rotor 32 suivant l'axe de rotation R du rotor 32.

Chaque élément de refroidissement 60, 62 comprend également une paroi de refroidissement 74, 76 s'étendant, le long de l'axe de rotation R du rotor 32, depuis la paroi de fixation 64, 66 jusqu'à l'extrémité libre 70, 72 de l'élément de refroidissement.

Chaque extrémité libre 70, 72 est disposée en regard d'une des parois latérales 40, 42 du bâti. Chaque paroi latérale 40, 42 est munie d'une portion interne 77, 78, avantageusement cylindrique, s'étendant suivant l'axe de rotation R du rotor 32, et entourant l'extrémité libre correspondante 70, 72. La portion interne entoure l'extrémité libre correspondante globalement parallèlement à l'axe de rotation R du rotor 32. Une distance radiale entre chaque extrémité libre 70, 72 et la portion interne correspondante 77, 78 est inférieure à 5 mm, de préférence à 1 mm.

Chaque paroi de refroidissement 74, 76 définit un volume interne qu'elle entoure. Chaque paroi de refroidissement entoure le volume interne qu'elle définit en étant globalement centrée sur l'axe de rotation R du rotor 32.

On entend par définissant un volume interne, le fait que la paroi de refroidissement 74, 76 est refermée sur elle-même et présente, par exemple, une forme de tronc de cône ou de cylindre.

Chaque paroi de refroidissement 74, 76 comprend une face interne 74A, 76A en regard du ou de l'un des orifices de refroidissement 50, 52 et notamment en regard de chaque orifice de refroidissement 50, 52 auquel l'élément de refroidissement auquel elle appartient est associé. Chaque paroi de refroidissement 74, 76 est propre à être en contact avec un flux d'air traversant chaque orifice de refroidissement 50, 52 auquel l'élément de refroidissement auquel elle appartient est associé.

Chaque paroi de refroidissement 74, 76 comprend également une face externe 74B, 76B, opposée à la face interne 74A, 76A, en regard du stator 34.

La face interne 74A, 76A et la face externe 74B, 76B s'étendent depuis la paroi de fixation 64, 66 jusqu'à l'extrémité libre 70, 72.

Chaque paroi de refroidissement 74, 76 divise l'espace intérieur E1 en un espace primaire respectif 80A, 82A de réception d'air extérieur, relié aérauliquement à l'un des orifices de refroidissement 50, 52, et un espace secondaire respectif 80B, 82B.

L'air compris dans chaque espace primaire 80A, 82A est en contact avec la face interne 74A, 76A correspondante et l'air compris dans chaque espace secondaire 80B, 82B est en contact avec la face externe 74B, 76B correspondante et le stator 34.

En d'autres termes, chaque paroi de refroidissement isole globalement l'air présent dans l'espace primaire 80A, 82A de l'air présent dans l'espace secondaire 80B, 82B.

Chaque orifice de refroidissement 50, 52 est agencé de sorte que pour chaque orifice de refroidissement 50, 52, lors de la rotation du rotor 32, l'air pénétrant dans l'espace intérieur E1, et notamment dans l'espace primaire 80A, 82A correspondant, via l'orifice de refroidissement 50, 52, ressort via le même orifice de refroidissement 50, 52.

Plus généralement les parois de refroidissement 74, 76 et les orifices de refroidissement 50, 52 sont agencés et dimensionnés pour assurer le fonctionnement précité.

A cet effet, chaque orifice de refroidissement 50, 52 débouche dans l'espace intérieur E1 et notamment dans l'espace primaire 80A, 82A correspondant à proximité de la face interne 74A, 76A de la paroi de refroidissement de l'élément de refroidissement auquel il est associé. La distance, mesurée suivant un axe central de chaque orifice de refroidissement 50, 52, entre une sortie de l'orifice de refroidissement 50, 52 et la face interne de la paroi de refroidissement de l'élément de refroidissement auquel il est associé est par exemple inférieure à 5 mm.

Le diamètre de chaque orifice de refroidissement 50, 52 est compris entre 20 mm et 100 mm, de préférence entre 30 mm et 50 mm.

En variante, les orifices de refroidissement 50, 52 ne sont pas circulaires mais oblongs ou en forme de haricot. La section de chaque orifice de refroidissement 50, 52 suivant une direction perpendiculaire à un axe traversant ledit orifice a par exemple une surface comprise entre 12,56 cm² et 314 cm² de préférence entre 27 cm² et 78 cm².

La face interne 74A, 76A et la face externe 74B, 76B sont globalement lisses et dépourvues d'éléments saillants et sont avantageusement des surfaces réglées globalement lisses et dépourvues d'éléments saillants.

On entend par surface réglée, une surface par chaque point de laquelle passe une droite, appelée génératrice, contenue dans la surface.

On entend par surface lisse et dépourvues d'éléments saillant, une surface sans aspérité, ni discontinuité.

Comme la paroi de refroidissement 74, 76, la face interne 74A, 76A et la face externe 74B, 76B sont avantageusement en forme de tronc de cône ou de cylindre s'étendant suivant l'axe de rotation R du rotor 32.

Avantageusement, et comme représenté à la figure 2, chaque paroi de refroidissement 74, 76, et donc chaque face interne 74A, 76A et chaque face externe 74B, 76B est en forme de tronc de cône avec une petite base disposée du côté du rotor 32 et une grande base disposée à l'opposé du rotor suivant l'axe de rotation R du rotor. Chaque paroi de refroidissement 74, 76 est alors inclinée par rapport à l'axe de rotation R du rotor et forme avec l'axe de rotation du rotor un angle compris entre 20° et 70° de préférence entre 25° et 55°.

Le fonctionnement du moteur 22 et notamment du refroidissement du moteur 22 est à présent décrit en référence à la figure 2.

Lorsque le véhicule ferroviaire 10 est en mouvement et que les moteurs électriques 22 sont en marche, le rotor 32 de chaque moteur 22 tourne afin de mettre en mouvement les essieux 20 des bogies 16, 18. Dans chaque moteur électrique 22, le rotor 32 et le stator 34 dégagent alors de la chaleur qui lorsqu'elle est trop importante peut influer sur les performances du moteur électrique 22.

Cependant, grâce au dispositif de refroidissement 36, qui est solidaire du rotor 32, lorsque le rotor 32 tourne, l'air dans l'espace intérieur E1 est refroidi et donc le rotor 32 et le stator 34 sont refroidis.

Plus précisément, les éléments de refroidissement 74, 76 tournent et donc les parois de refroidissement 74, 76 tournent, ce qui provoque une circulation d'air. La circulation d'air se fait via les orifices de refroidissement 50, 52, depuis l'espace extérieur E2 vers l'espace intérieur E1 et notamment vers les espaces primaires 80A, 82A, puis depuis l'espace intérieur E1 et notamment les espaces primaires 80A, 82A vers l'espace extérieur E2. Les orifices de refroidissement 50, 52 servent à la fois de conduit d'entrée d'air dans l'espace intérieur E1 et notamment les espaces primaires 80A, 82A et de conduit d'évacuation d'air de l'espace intérieur E1 et notamment des espaces primaires 80A, 82A.

La circulation d'air permet ainsi de refroidir l'air dans l'espace intérieur E1 et notamment dans les espaces primaires 80A, 82A et donc de refroidir chaque paroi de refroidissement 74, 76 et par conséquent, par transfert thermique, l'air dans chaque espace secondaire 80B, 82B. Ainsi, l'échauffement du rotor 32 et du stator 34 est maintenu dans des gammes de chaleur permettant un fonctionnement optimal du moteur électrique 22.

La vitesse nominale de rotation du moteur permet d'optimiser la circulation d'air et donc les échanges thermiques afin de refroidir l'espace intérieur E1.

En outre, le fait que les faces externes 74B, 76B et internes 74A, 76A soient en forme de tronc de cône et lisses, permet d'optimiser leurs dimensions et donc les échanges thermiques, tout en limitant le bruit provoqué par le dispositif de refroidissement 36, ainsi que les pertes mécaniques liées à la rotation du dispositif de refroidissement 36.

De plus, la présente invention présente comme avantage d'être simple en termes de structure et peu coûteuse à mettre en œuvre. En effet, la structure du dispositif de refroidissement 36 est relativement simple.

## Revendications

1. Moteur électrique (22) comprenant un rotor (32), un stator (34), un dispositif de refroidissement (36) et un bâti (30),
le bâti (30) définissant un espace intérieur (E1) de réception du rotor (32), du stator (34) et du dispositif de refroidissement (36), le bâti (30) comprenant au moins un orifice de refroidissement (50, 52) reliant l'espace intérieur (E1) à un espace (E2) extérieur au bâti (30),
le rotor (32) comprenant deux extrémités (32A, 32B) opposées suivant un axe de rotation (R) du rotor (32),
le dispositif de refroidissement (36) comprenant au moins un élément de refroidissement (60, 62) disposé à l'une des extrémités (32A, 32B) du rotor (32), chaque élément de refroidissement (60, 62) comprenant une paroi (64, 66) de fixation au rotor (32), solidaire en rotation du rotor (32), et une paroi de refroidissement (74, 76) s'étendant, le long de l'axe de rotation (R) du rotor (32), depuis la paroi de fixation (64, 66) jusqu'à une extrémité libre (70, 72) de l'élément de refroidissement (60, 62), la paroi de refroidissement (74, 76) définissant un volume interne qu'elle entoure et comprenant une face interne (74A, 76A) en regard du ou de l'un des orifices de refroidissement (50, 52) et propre à être en contact avec un flux d'air traversant l'orifice de refroidissement (50, 52) et une face externe (74B, 76B) en regard du stator (34), opposée à la face interne (74A, 76A), la face interne et la face externe s'étendant depuis la paroi de fixation (64, 66) jusqu'à l'extrémité libre (70, 72),
la face interne (74A, 76A) et la face externe (74B, 76B) sont globalement lisses et dépourvues d'éléments saillants,
**caractérisé en ce que** le ou chaque orifice de refroidissement (50, 52) débouche dans l'espace intérieur (E1) à proximité de la face interne (74A, 76A) de la ou de l'une des parois de refroidissement (74, 76), à une distance mesurée suivant un axe central dudit orifice de refroidissement (50, 52) inférieure à 5 mm.

2. Moteur électrique selon la revendication 1, dans lequel chaque orifice de refroidissement (50, 52) est agencé de sorte que pour chaque orifice de refroidissement (50, 52), lors de la rotation du rotor (32), l'air pénétrant dans l'espace intérieur (E1) via ledit orifice de refroidissement (50, 52) ressort via le même orifice de refroidissement (50, 52).

3. Moteur électrique selon la revendication 1 ou 2, dans lequel les faces interne (74A, 76A) et externe (74B, 76B) sont des surfaces réglées globalement lisses et dépourvues d'éléments saillants et sont avantageusement en forme de tronc de cône ou de cylindre s'étendant suivant l'axe de rotation (R) du rotor (32).

4. Moteur électrique selon l'une quelconque des revendications précédentes, dans lequel le dispositif de refroidissement (36) comprend deux éléments de refroidissement (60, 62) disposés chacun à l'une des extrémités respective (32A, 32B) du rotor (32) et dans lequel le bâti (30) comprend au moins un orifice de refroidissement respectif (50, 52) pour chaque élément de refroidissement (60, 62).

5. Moteur électrique selon l'une quelconque des revendications précédentes, dans lequel le moteur électrique (22) est configuré pour atteindre une vitesse nominale supérieure à 5000 tours par minute, de préférence de l'ordre de 6000 tours par minute.

6. Moteur électrique selon l'une quelconque des revendications précédentes, dans lequel une section de chaque orifice de refroidissement (50, 52) suivant une direction perpendiculaire à un axe traversant ledit orifice a une surface comprise entre 12,56 cm² et 314 cm² de préférence entre 27 cm² et 78 cm².

7. Moteur électrique selon l'une quelconque des revendications précédentes, dans lequel chaque paroi de refroidissement (74, 76) divise l'espace intérieur (E1) en un espace primaire (80A, 82A) de réception d'air extérieur, relié aérauliquement à le ou l'un des orifices de refroidissement (50, 52) et dont l'air qu'il comprend est en contact avec la face interne (74A, 76A) et un espace secondaire (80B, 82B) dont l'air qu'il comprend est en contact avec la face externe (74B, 76B) et le stator (34).

8. Moteur électrique selon l'une quelconque des revendications précédentes, dans lequel chaque extrémité libre (70, 72) est disposée en regard d'une paroi latérale respective (40, 42) du bâti (30), ladite paroi latérale (40, 42) étant munie d'une portion interne (77, 78) s'étendant suivant l'axe de rotation (R) du rotor (32), et entourant ladite extrémité libre (70, 72), une distance radiale entre ladite extrémité libre (70, 72) et ladite portion interne (77, 78) étant inférieure à 5 mm, de préférence à 1 mm.

9. Véhicule ferroviaire (10) comprenant au moins un moteur électrique (22), **caractérisé en ce que** le ou chaque moteur électrique (22) est selon l'une quelconque des revendications précédentes.

## Patentansprüche

1. Elektrischer Motor (22), der einen Rotor (32), einen Stator (34), eine Kühlvorrichtung (36) und einen Tragrahmen (30) umfasst, wobei
der Tragrahmen (30) einen Innenraum (E1) zur Aufnahme des Rotors (32), des Stators (34) und der Kühlvorrichtung (36) begrenzt und der Tragrahmen (30) mindestens eine Kühlöffnung (50, 52) umfasst, die den Innenraum (E1) mit einem Außenraum (E2) des Gestells (30) verbindet,
der Rotor (32) zwei gemäß einer Drehachse (R) des Rotors (32) entgegengesetzte Enden (32A, 32B) umfasst,
die Kühlvorrichtung (36) mindestens ein an einem der Enden (32A, 32B) des Rotors (32) angeordnetes Kühlelement (60, 62) aufweist, das eine Wand (64, 66) zum Befestigen an dem Rotor (32), die drehfest mit dem Rotor (32) ist, und eine Kühlwand (74, 76) entlang der Drehachse (R) des Rotors (32) von der Befestigungswand (64, 66) bis zu einem freien Ende (70, 72) des Kühlelementes (60, 62) umfasst, wobei die Kühlwand (74, 76) ein Innenvolumen, das sie umgibt, begrenzt und eine Innenseite (74A, 76A) gegenüber der oder einen der Kühlöffnungen (50, 52) und geeignet, in Kontakt mit einem die Kühlöffnung (50, 52) durchquerenden Luftstrom zu sein, und eine Außenseite (74B, 76B) gegenüber des Stators, entgegengesetzt zur Innenseite (74A, 76A) umfasst, wobei die Innenseite und die Außenseite sich von der Befestigungswand (64, 66) bis zum freien Ende (70, 72) erstrecken,
die Innenseite (74A, 76A) und die Außenseite (74B, 76B) im Wesentlichen glatt sind und keine vorspringenden Elemente aufweisen,
**dadurch gekennzeichnet, dass** die oder jede Kühlöffnung (50, 52) in den Innenraum (E1) in der Nähe der Innenseite (74A, 76A) der oder einer der Kühlwände (74, 76) in einer Entfernung, gemessen gemäß einer Mittelachse der Kühlöffnung (50, 52), kleiner als 5 mm mündet.

2. Elektrischen Motor nach Anspruch 1, bei dem jede Kühlöffnung (50, 52) so angeordnet ist, dass für jede Kühlöffnung (50, 52) die bei der Drehung des Rotors (32) in den Innenraum (E1) über die Kühlöffnung (50, 52) eindringende Luft über dieselbe Kühlöffnung (50, 52) austritt.

3. Elektrischer Motor nach Anspruch 1 oder 2, bei dem die Innenseite (74A, 76A) und Außenseite (74B, 76B) Flächen sind, die im Wesentlichen geglättet sind und ohne vorspringende Elemente sind und vorteilhafterweise gemäß der Drehachse (R) des Rotors (32) kegelstumpf- oder zylinderförmig sind.

4. Elektrischer Motor nach einem beliebigen der vorhergehenden Ansprüche, bei dem die Kühlvorrichtung (36) zwei Kühlelemente (60, 62) umfasst, die jeweils an einem jeweiligen Ende (32A, 32B) des Rotors (32) angeordnet sind, und bei dem der Tragrahmen (30) mindestens eine jeweilige Kühlöffnung (50, 52) für jedes Kühlelement (60, 62) umfasst.

5. Elektrischer Motor nach einem beliebigen der vorhergehenden Ansprüche, bei dem der elektrischen Motor (22) ausgebildet ist, eine nominale Geschwindigkeit größer als 5000 Umdrehungen/min, vorzugsweise in der Größenordnung von 6000 Umdrehungen/min zu erreichen.

6. Elektrischer Motor nach einem beliebigen der vorhergehenden Ansprüche, bei dem ein Abschnitt jeder Kühlöffnung (50, 52) gemäß einer Richtung senkrecht zu einer Achse, die die Öffnung durchquert, eine Fläche zwischen 12,56 cm² und 314 cm², vorzugsweise zwischen 27 cm² und 78 cm² aufweist.

7. Elektrischer Motor nach einem beliebigen der vorhergehenden Ansprüche, bei dem jede Kühlwand (74, 76) den Innenraum (E1) in einen Hauptraum (80A, 82A) zur Aufnahme von Außenluft, der lufttechnisch an die oder eine der Kühlöffnungen (50, 52) angeschlossen ist und dessen enthaltene Luft in Kontakt mit der Innenseite (74A, 76A) ist, und einen Nebenraum (80B, 82B) geteilt ist, dessen enthaltene Luft in Kontakt mit der Außenfläche (74B, 76B) und dem Stator (34) ist.

8. Elektrischer Motor nach einem beliebigen der vorhergehenden Ansprüche, bei dem jedes freie Ende (70, 72) gegenüber einer jeweiligen Seitenwand (40, 42) des Tragrahmens (30) angeordnet ist, wobei die Seitenwand (40, 42) mit einem Innenteil (77, 78) ausgerüstet ist, das sich gemäß der Drehachse (R) des Rotors (32) erstreckt und das freie Ende (70, 72) umgibt, wobei ein radialer Abstand zwischen dem freien Ende (70, 72) und dem Innenteil (77, 78) kleiner als 5 mm, vorzugsweise als 1 mm ist.

9. Schienenfahrzeug (10), das mindestens einen elektrischen Motor (22) umfasst, **dadurch gekennzeichnet, dass** der oder jeder elektrischen Motor (22) nach einem beliebigen der vorhergehenden Ansprüche ausgebildet ist.

## Claims

1. An electric motor (22) comprising a rotor (32), a stator (34), a cooling device (36) and a frame (30),
the frame (30) defining an inner space (E1) for receiving the rotor (32), the stator (34) and the cooling device (36), the frame (30) comprising at least one cooling orifice (50, 52) connecting the inner space (E1) to an outer space (E2) of the frame (30),
the rotor (32) comprising two opposite ends (32A, 32B) along a rotation axis (R) of the rotor (32),
the cooling device (36) comprising at least one cooling element (60, 62) positioned at one of the ends (32A, 32B) of the rotor (32), each cooling element (60, 62) comprising a fastening wall (64, 66) to the rotor (32), secured in rotation with the rotor (32), and a cooling wall (74, 76) extending, along the rotation axis (R) of the rotor (32), from the fastening wall (64, 66) to a free end (70, 72) of the cooling element (60, 62), the cooling wall (74, 76) defining an inner volume that it surrounds and comprising an inner face (74A, 76A) across from the or one of the cooling orifices (50, 52) and able to be in contact with a flow of air passing through the cooling orifice (50, 52) and an outer face (74B, 76B) across from the stator (34), opposite the inner face (74A, 76A), the inner face and the outer face extending from the fastening wall (64, 66) to the free end (70, 72),
the inner face (74A, 76A) and the outer face (74B, 76B) are globally smooth and free of protruding elements,
**characterized in that** each cooling orifice (50, 52) emerges in the inner space (E1) near the inner face (74A, 76A) of the or one of the cooling walls (74, 76), at a distance measured along a central axis of said cooling orifice (50, 52) smaller than 5 mm.

2. The electric motor according to claim 1, wherein each cooling orifice (50, 52) is arranged such that for each cooling orifice (50, 52), during the rotation of the rotor (32), the air penetrating the inner space (E1) via said cooling orifice (50, 52) leaves through the same cooling orifice (50, 52).

3. The electric motor according to claim 1 or 2, wherein the inner (74A, 76A) and outer (74B, 76B) faces are globally smooth adjusted surfaces free of protruding elements and are advantageously in the form of cone or cylinder trunks extending along the rotation axis (R) of the rotor (32).

4. The electric motor according to any one of the preceding claims, wherein the cooling device (36) comprises two cooling elements (60, 62) each positioned at one of the respective ends (32A, 32B) of the rotor (32) and in which the frame (30) comprises at least one respective cooling orifice (50, 52) for each cooling element (60, 62).

5. The electric motor according to any one of the preceding claims, wherein the electric motor (22) is configured to reach a nominal speed greater than 5000 revolutions per minute, preferably about 6000 revolutions per minute.

6. The electric motor according to any one of the preceding claims, wherein a section of each cooling orifice (50, 52) in a direction perpendicular to an axis passing through said orifice has a surface area between 12.56 cm² and 3.14 cm², preferably between 27 cm² and 78 cm².

7. The electric motor according to any one of the preceding claims, wherein each cooling wall (74, 76) divides the inner space (E1) into a primary space (80A, 82A) for receiving outside air, aeraulically connected to the or one of the cooling orifices (50, 52) and whereof the air it comprises is in contact with the inner face (74A, 76A) and a secondary space (80B, 82B) whereof the air it comprises is in contact with the outer face (74B, 76B) and the stator (34).

8. The electric motor according to any one of the preceding claim claims, wherein each free end (70, 72) is positioned across from a respective side wall (40, 42) of the frame (30), said side wall (40, 42) being provided with an inner portion (77, 78) extending along the rotation axis (R) of the rotor (32), and surrounding said free end (70, 72), a radial distance between said free end (70, 72) and said inner portion (77, 78) being less than 5 mm, preferably than 1 mm.

9. The rail vehicle (10) comprising at least one electric motor (22), **characterized in that** the or each electric motor (22) is according to any one of the preceding claims.
